# EUROPÄISCHE PATENTSCHRIFT

(11) **EP 4 073 745 B1**
(45) Veröffentlichungstag und Bekanntmachung des Hinweises auf die Patenterteilung: **07.10.2026**
(21) Anmeldenummer: 20842177.6
(22) Anmeldetag: 07.12.2020
(51) Int. Cl.: G06T 5/50, G06T 7/33

(54) **VERFAHREN UND VORRICHTUNG ZUR PARALLAXENBESTIMMUNG VON AUFNAHMEN EINES MULTILINSEN-KAMERASYSTEMS**
METHOD AND DEVICE FOR PARALLAX DETERMINATION OF IMAGES CAPTURED BY A MULTI-LENS CAMERA SYSTEM
PROCÉDÉ ET DISPOSITIF DE DÉTERMINATION DE PARALLAXE D'IMAGES CAPTURÉES PAR UN SYSTÈME DE CAMÉRA À MULTIPLES OBJECTIFS

(30) Priorität: 09.12.2019 DE 102019133515
(43) Veröffentlichungstag der Anmeldung: 19.10.2022
(73) Patentinhaber: Cubert GmbH, 89081 Ulm (DE)
(72) Erfinder: HEINE, René, 89075 Ulm (DE); BRANDES, Arnd Raphael, 89075 Ulm (DE)
(74) Vertreter: Konrad, Michael
(86) Internationale Anmeldenummer: PCT/DE2020/101033
(87) Internationale Veröffentlichungsnummer: WO 2021/115531

(56) Entgegenhaltungen:
- EP-A1- 4 042 101
- US-A1- 2013 250 123
- US-B1- 8 619 082
- JHAN J. P. ET AL: "INVESTIGATION OF PARALLAX ISSUES FOR MULTI-LENS MULTISPECTRAL CAMERA BAND CO-REGISTRATION", ISPRS - INTERNATIONAL ARCHIVES OF THE PHOTOGRAMMETRY, REMOTE SENSING AND SPATIAL INFORMATION SCIENCES, vol. XLII-2/W6, 1 August 2017 (2017-08-01), pages 157 - 163, XP055781030, Retrieved from the Internet <URL:https://pdfs.semanticscholar.org/e008/61e8747c8dbd9e2c263f39b8ed66f24c4082.pdf> DOI: 10.5194/isprs-archives-XLII-2-W6-157-2017
- MENG LINGFEI ET AL: "Parallax rectification for spectrally-coded plenoptic cameras", 2015 IEEE INTERNATIONAL CONFERENCE ON IMAGE PROCESSING (ICIP), IEEE, 27 September 2015 (2015-09-27), pages 1305 - 1309, XP032826633, DOI: 10.1109/ICIP.2015.7351011

## Beschreibung

Die Erfindung betrifft ein Verfahren und eine Vorrichtung zur Parallaxenbestimmung von Aufnahmen eines Multilinsen-Kamerasystems, insbesondere zu Kalibrationszwecken bzw. zur Auswertung von Bildaufnahmen. Das Multilinsen-Kamerasystem ist dabei bevorzugt ein Kamerasystem zur (hyper-)spektralen Aufnahme von Bildern.

In vielen Bereichen der Wirtschaft und Wissenschaft werden Kameras verwendet, die zusätzlich zu einer Ortsauflösung eine spektrale Auflösung besitzen (Spektralkameras), welche oftmals über das sichtbare Spektrum hinausgeht ("Multispektralkameras"). Beispielsweise werden bei Vermessungen der Erdoberfläche aus der Luft oftmals Kameras eingesetzt, die nicht nur eine normale RGB-Farbauflösung besitzen, sondern ein hochaufgelöstes Spektrum ggf. bis in den UV- oder Infrarotbereich hinein liefern. Mittels dieser Messungen ist z.B. eine Erkennung einzelner Bepflanzungsbereiche in landwirtschaftlich genutzten Gebieten möglich. Damit kann beispielsweise der Wachstumszustand oder die Gesundheit von Pflanzen oder die Verteilung verschiedener chemischer Elemente wie Chlorophyll oder Lignin bestimmt werden.

Zu diesen Messungen hat sich in den letzten Jahrzehnten eine spektral hochauflösende Bildnahmetechnik bewährt, die als "Hyperspectral Imaging" bezeichnet wird. Dieses Hyperspectral Imaging erlaubt beispielsweise eine Erkennung und Unterscheidung verschiedener chemischer Elemente aufgrund des ortsaufgelöst aufgenommenen Spektrums.

Bei einem typischen Aufbau eines (hyper-)spektralen Kamerasystems ist eine Linsenmatrix vor einem Bildsensor angeordnet, welches ein Motiv in Form vieler verschiedener Bilder (eines pro Linse) auf den Bildsensor abbildet. Ein solches Kamerasystem wird auch als "Multilinsen-Kamerasystem" bezeichnet. Mittels eines Filterelements, z.B. einem Mosaikfilter oder einem linearvariablen Filter, zwischen Linsenmatrix und Bildsensor wird jedes der Bilder in einem anderen Spektralbereich aufgenommen. Man erhält eine Vielzahl von Abbildungen des Motivs in unterschiedlichen Spektralbereichen ("Kanälen").

Das Dokument "INVESTIGATION OF PARALLAX ISSUES FOR MULTI-LENS MULTISPECTRALCAMERA BAND CO-REGISTRATION" (J. P. Jhan et al. The International Archives of the Photogrammetry, Remote Sensing and Spatial Information Sciences, Volume XLII-2/W6, 2017 International Conference on Unmanned Aerial Vehicles in Geomatics, 4-7 September 2017, Bonn, Germany) befasst sich mit Multispektralkameras mit mehreren Linsen (MSCs), die mit jeder einzelnen Linse multispektrale Informationen aufzeichnen können. Da die Multisensorgeometrie der Mehrlinsenstruktur jedoch erhebliche Bandfehlregistrierungseffekte im Originalbild verursacht, ist eine Bandkoregistrierung erforderlich, um genaue Spektralinformationen zu erhalten.

Nachteil des Standes der Technik ist jedoch, dass die aufgenommenen Bilder nicht optimal miteinander vergleichbar sind. Sie bedürfen noch der Kalibration. Insbesondere bei einer Aufnahme von Objekten mit unterschiedlichem Abstand zum Kamerasystem (z.B. eines Objekts vor einem Hintergrund bzw. zwei oder mehr Objekten in unterschiedlicher Distanz) führen Parallaxeneffekte dazu, dass eine spektrale Einordnung eines Objekts erschwert bis unmöglich ist.

Aufgabe der vorliegenden Erfindung war es, die Nachteile des Standes der Technik zu überwinden und insbesondere ein Multilinsen-Kamerasystem zur Verfügung zu stellen, welches den Parallaxeneffekt berücksichtigt.

Diese Aufgabe wird durch ein Verfahren und eine Vorrichtung gemäß den Ansprüchen gelöst.

Ein erfindungsgemäßes Verfahren zur Parallaxenbestimmung von Aufnahmen eines Multilinsen-Kamerasystems umfasst die folgenden Schritte:
- Aufnahme und/oder Bereitstellung von mindestens zwei Bildern eines Objekts aufgenommen von dem multispektralen Multilinsen-Kamerasystem in unterschiedlichen Spektralbereichen,
- Erkennung des Objekts in den aufgenommenen Bildern mittels digitaler Objekterkennung und Erstellung eines virtuellen Objekts aus der erkannten Abbildung des Objekts,
- Ermittlung von Koordinaten des virtuellen Objekts in den Bildern in Form von absoluten Bildkoordinaten und/oder relativer Bildkoordinaten zu anderen Elementen in den Bildern,
- Bestimmung der Parallaxe des Objekts aus den ermittelten Koordinaten und der bekannten Position der Aufnahmeorte der Bilder auf einem Bildsensor des Multilinsen-Kamerasystems.

Es wird dabei nach der Bestimmung der Parallaxe des Objekts diese Parallaxe dazu verwendet wird, für ein Bild einen Verschiebungsvektor zu bestimmen, mit dem das virtuelle Objekt an die Position eines virtuellen Objektes in einem anderen Bild verschoben werden kann, wobei das Bild oder ein weiteres Bild, welches an der betreffenden Stelle des Bildsensors aufgenommen wurde, entsprechend dem Verschiebungsvektor verschoben wird, um die Parallaxe zu kompensieren.

Die Erfinder erkannten dabei, dass dieses Verfahren mit zwei Bildern durchführbar ist, welche in unterschiedlichen Spektralbereichen aufgenommen worden sind, also bei denen das Objekt in der Regel unterschiedlich abgebildet worden ist.

Eine Aufnahme von mindestens zwei Bildern eines Objekts mit dem multispektralen Multilinsen-Kamerasystem in unterschiedlichen Spektralbereichen ist dem Fachmann bekannt und wird von dem (bekannten) multispektralen Multilinsen-Kamerasystem in bekannter Weise angefertigt. Ein Multilinsen-Kamerasystem zur (multi- / hyper-) spektralen Aufnahme von Bildern umfasst einen flächigen Bildsensor, ein ortssensitives spektrales Filterelement und ein Abbildungssystem. Das Abbildungssystem umfasst dabei eine flächige Linsenmatrix mit einer Vielzahl von Einzellinsen, welche so angeordnet sind, dass sie zu einem ersten Aufnahmezeitpunkt eine Vielzahl von rasterförmig angeordneten ersten Abbildungen eines Motivs in einem ersten Bereich auf dem Bildsensor erzeugen. Die Linsen sind z.B. sphärische Linsen, Zylinderlinsen, holographische Linsen oder Fresnellinsen oder Linsensysteme (z.B. Objektive) aus mehreren solcher Linsen.

Flächige Bildsensoren sind dem Fachmann im Grunde bekannt. Es handelt sich hierbei besonders bevorzugt um Pixeldetektoren, welche eine elektronische Aufnahme von Bildpunkten ("Pixeln") erlauben. Bevorzugte Pixeldetektoren sind CCD-Sensoren (CCD: "charge-coupled device"; dt. "ladungsgekoppeltes Bauteil") oder CMOS-Sensoren (CMOS: "Complementary metal-oxide-semiconductor"; dt. "sich ergänzender Metall-Oxid-Halbleiter"). Besonders bevorzugt sind auf Silizium basierende Sensoren, aber auch InGaAs-Sensoren sowie auf Bleioxid oder Graphen basierte Sensoren, insbesondere für Wellenlängenbereiche außerhalb des sichtbaren Bereichs.

Ein spektrales Filterelement, welches so gestaltet ist, dass es an unterschiedlichen Positionen der Fläche des Filterelements unterschiedliche Spektralanteile von auftreffendem Licht transmittiert und andere Spektralanteile nicht transmittiert, wird hier als "ortssensitives spektrales Filterelement" bezeichnet, wobei es auch als "ortsabhängiges spektrales Filterelement" bezeichnet werden könnte. Es dient dazu, die durch das Abbildungssystem erzeugten Abbildungen auf dem Bildsensor nach unterschiedlichen (kleinen) Spektralbereichen zu filtern.

Für die Anordnung des Filterelements gibt es mehrere Möglichkeiten. Das Filterelement kann beispielsweise direkt vor der Linsenmatrix positioniert sein oder zwischen Linsenmatrix und Bildsensor. Es ist auch bevorzugt, dass Komponenten des Abbildungssystems als Filterelement ausgestaltet sind, insbesondere die Linsenmatrix. Beispielsweise kann das Substrat der Linsenmatrix als Filterelement ausgestaltet sein.

Eine Linsenmatrix im Sinne der Erfindung umfasst eine Vielzahl von Linsen die rasterförmig zueinander, also in einer regelmäßigen Anordnung, angeordnet sind, insbesondere auf einem Träger. Die Linsen sind bevorzugt in regelmäßigen Zeilen und Spalten oder versetzt zueinander angeordnet. Besonders bevorzugt ist eine rechteckige bzw. quadratische oder eine hexagonale Anordnung. Die Linsen können beispielsweise sphärische Linsen oder zylindrische Linsen sein, aber auch asphärische Linsen sind in einigen Anwendungsfällen bevorzugt.

In der Regel zeigen bei (multi- / hyper-) spektralen Aufnahmen stets ähnliche Bilder desselben Motivs. Durch das Filterelement werden diese Bilder mit jeweils unterschiedlichen (Licht)Wellenlängen bzw. in unterschiedlichen Wellenlängenbereichen vom Bildsensor aufgenommen.

Die Bilder liegen als digitale Bilder vor, deren Bildelemente als "Pixel" bezeichnet werden. Diese Pixel liegen an vorbestimmten Stellen des Bildsensors, so dass jedes Bild ein Koordinatensystem von Pixelpositionen besitzt. Im Rahmen von multispektralen Aufnahmen werden die Bilder häufig auch als "Kanäle" bezeichnet.

Da die aufgenommenen Bilder typischerweise in einem Bildspeicher abgespeichert werden, können diese auch für das Verfahren von dort abgerufen werden. Das Verfahren kann selbstverständlich auch mit "alten" Bildern arbeiten, die aufgenommen worden sind und nun einfach aus einem Speicher für das Verfahren eingelesen und dadurch bereitgestellt werden.

Das aufgenommene Bild sollte ein Motiv darstellen, welches mindestens zwei Objekte oder ein Objekt vor einem Hintergrund oder ein Objekt mit einem Muster (bevorzugt einem wiederholungsarmen Muster) umfasst. Mit "Objekt" ist hier kein uniformes Motiv gemeint, sondern ein Bildelement eines nicht-uniformen Motivs. Beispielsweise ist das Objekt ein wiederholungsarmes (Kalibrations-) Target, ein Bauwerk, ein Tier oder eine Pflanze (oder eine Gruppe von solchen Elementen) in einem Landschaftsmotiv oder eine Erhebung oder Vertiefung in einem Relief (z.B. ein Berg oder ein Tal). Da das Bild ein 2D-Bild ist, handelt es sich bei Betrachtung eines einzelnen Bildes bei dem Objekt um einen Ausschnitt dieses Bildes.

Im Rahmen des erfindungsgemäßen Verfahrens wird das Objekt nun in den aufgenommenen Bildern mittels digitaler Objekterkennung erkannt. Das Bild liegt zunächst als eine Ansammlung von Pixeln vor. Für das Verfahren müssen nun diejenigen Pixel in den Bildern ermittelt werden, welche das Objekt darstellen, also dem Objekt zugeordnet werden können. Dabei können sämtliche Pixel des Objekts ermittelt werden oder nur ein Teil der Pixel (z.B. der Rand des Objekts). Wichtig für eine Erkennung ist dabei, dass zumindest eine Gruppe von Pixeln ermittelt wird, die dem Objekt zugeordnet sind, und aus denen sich die Position zumindest eines Teils des Objekts (bevorzugt aber des gesamten Objekts) ableiten lässt. Bevorzugt wird die Objekterkennung mittels Bildsegmentierung und/oder merkmalsbasiert durchgeführt.

Bei einer Bildsegmentierung erfolgt bevorzugt zunächst eine Vorverarbeitung des Bildes, z.B. mittels eines Kantenfilters bzw. mittels Bilderosion. Darauf folgt die eigentliche Segmentierung, insbesondere mittels einem Kantenfilter, einem adaptivem Schwellwertfilter (engl.: "Thresholding") bzw. einer Flutfüllung (engl.: "Flood-fill"). In einem Nachgang erfolgt dann noch bevorzugt eine Änhlichkeitsanalyse der virtuellen Objekte, z.B. via Objektparametern wie z.B. Rundheit (engl.: "Roundness"), Massivität (engl.: "Solidity") oder die Schnittfläche. Ein Vorteil dieser Beispiele sind die vergleichsweise kurzen Prozesszeiten.

Bei einer merkmalsbasierten Objekterkennung erfolgt bevorzugt ebenfalls eine Vorverarbeitung wie vorangehend beschrieben. Im Unterschied zur Bildsegmentierung erfolgt jedoch nun eine direkte Ähnlichkeitsanalyse anhand des gesamten Bildes oder einer Reihe von Teilen des Bildes, z.B. mittels einer Kreuzkorrelation.

Es kann jedoch auch eine Kombination aus Bildsegmentierung und merkmalsbasierter Objekterkennung erfolgen. In diesem Rahmen wird bevorzugt eine Segmentierung des Objekts in einem der Bilder verwenden, um es in dem anderen Bild zu suchen. Dies kann z.B. dadurch erfolgen, dass dessen Kontur mittels Hough-Transformation in dem anderen (entsprechend vorverarbeiteten) Bild gesucht wird.

An dieser Stelle sollte erwähnt werden, dass mit einer Multilinsenkamera eine Vielzahl von einzelnen Bildern (Kanälen) in unterschiedlichen Spektralbereichen aufgenommen wird. Auch wenn das erfindungsgemäße Verfahren mit nur zwei Bildern funktioniert, ist es dennoch bevorzugt, mehr als zwei Bilder zu verwenden (z.B. mindestens 4, 6 oder 10 Bilder, bzw. alle von dem Kamerasystem aufgenommenen Bilder). Da es durchaus sein kann, dass das Objekt in einigen Bildern nicht vollständig abgebildet wird, da die einzelnen Teile des Objekts in unterschiedliche Spektren unterschiedlich sichtbar sein können, ist es besonders bevorzugt, zu bestimmen, welchen Teile des Objekts in den jeweiligen Bildern sichtbar ist. Hierzu ist es bevorzugt, Teile des Objekts in einem Bild Teilen des Objekts in anderen Bildern zuzuordnen und damit die Teile des Objekts in dem einem Bild Objektkoordinaten zuzuordnen. In diesem Rahmen ist bevorzugt, auf die Techniken des "Scan Matching" zurückzugreifen. Auch wenn Scan-Matching eigentlich aus dem technischen Feld der Navigation stammt, ist das Grundprinzip dieser Technologie hier anwendbar, da auch hier ein geschlossenes Bild (an Stelle einer Karte) aus Teilaufnahmen erstellt wird und Koordinaten festgelegt werden.

Bevorzugt kann eine Vervollständigung des Objekts und/oder eine Zuordnung von Koordinaten durch eine Kreuzkorrelation erreicht werden, wobei bei der Kreuzkorrelation unabhängig für jeden Kanal mit einem vorbestimmten (aber im Grunde beliebigen) Referenzkanal durchgeführt wird. Mittels des bekannten Prinzips des "best match" werden dann die gewünschten Informationen erhalten.

Im Hinblick auf die Erstellung des virtuellen Objekts aus der erkannten Abbildung des (realen) Objekts, wird dieses virtuelle Objekt in einer Form erstellt, die ein Rechensystem verarbeiten kann. Dieses virtuelle Objekt umfasst bevorzugt die Menge der Pixel des Bildes, die als dem Objekt zugehörig erkannt wurden oder zumindest die Koordinaten dieser Pixel im Bild. Das virtuelle Objekt kann aber auch vorzugsweise eine Vektorgrafik umfassen, die das Objekt in seiner erkannten Form repräsentiert.

Mit der Kenntnis der virtuellen Objekte der Bilder können nun deren Koordinaten in den Bildern ermittelt werden. Dies kann beispielsweise dadurch geschehen, dass die Bildkoordinaten derjenigen Pixel ermittelt werden, welche dem Objekt zugeordnet worden sind. Dabei ist es nicht unbedingt notwendig, die Koordinaten aller dieser Pixel zu ermitteln. Vorzugsweise werden nur die Koordinaten des Randes des Objekts und/oder die Koordinate eines in allen Bildern übereinstimmenden Objektpunktes (z.B. der Objektmittelpunkt) ermittelt. Diese Koordinaten sind bevorzugt absolute Bildkoordinaten in den Bildern und/oder relativer Bildkoordinaten zu anderen Elementen in den Bildern. Absolute Bildkoordinaten haben den Vorteil, dass unterschiedliche Bilder bezüglich der Objektposition direkt miteinander verglichen werden können, relative Koordinaten haben den Vorteil, dass das Objekt mit der Lage eines anderen Objekts (z.B. einem Marker im Hintergrund) verglichen werden kann.

Wohlgemerkt handelt es sich bei den virtuellen Objekten um Repräsentationen desselben Objektes in den Bildern. Durch die Parallaxe werden die Koordinaten je nach Aufnahmewinkel unterschiedlich sein.

Mit diesen Koordinaten und der bekannten Position der Aufnahmeorte der Bilder auf einem Bildsensor des Multilinsen-Kamerasystems ist es nun möglich, die Parallaxe des Objekts zu bestimmen. Selbstverständlich kann auch die Parallaxe von zwei oder mehr Objekten bestimmt werden. Dazu müssen nur die Schritte Erkennung des (betreffenden) Objekts, Ermittlung von den Koordinaten des (betreffenden) virtuellen Objekts und Bestimmung der Parallaxe des Objekts wiederholt werden.

Hierzu ist insbesondere anzumerken, dass bei einer rasterförmigen Anordnung der Linsen und damit auch der Bilder auf dem Bildsensor die Daten zur Lage des Objektes überbestimmt sind. So lassen sich z.B. die Koordinaten des Objekts für ein drittes Bild, welches zwischen den vorgenannten zwei Bildern auf dem Bildsensor liegt, rechnerisch ermitteln, z.B. durch einfache Mittelwertbildung. Bei einer Regelmäßigen Anordnung von Aufnahmebereichen für Bilder auf dem Bildsensor besteht ein linearer Zusammenhang zwischen dem Abstand der Bereiche voneinander und der Parallaxe. Somit lässt sich allgemein die Parallaxe (bzw. eine betreffende Koordinate) für ein drittes Bild ermitteln, welches auf einer gemeinsamen Linie mit den beiden anderen Bildern liegt. Genauso lassen sich die ermittelten Koordinaten in einem dritten Bild einfach durch die ermittelten Koordinaten in den beiden aufgenommenen Bildern überprüfen und sowohl systematische als auch statistische Fehler korrigieren bzw. vermindern. Im Grunde reichen drei Bilder, deren Aufnahmeorte auf dem Bildsensor auf einem Dreieck liegen, bereits aus, die Objektkoordinaten (sowie ggf. auch die Objektform) für alle übrigen Bilder abzuleiten, da die Bildpositionen auf dem Bildsensor bekannt sind und die Parallaxe ebenfalls.

Zudem kann die Erkennung eines Objekts rekursiv gestaltet sein, so dass zunächst zwei Bilder mit dem Verfahren bearbeitet werden (oder ggf. auch die drei vorgenannten auf einem Dreieck), danach ein weiteres Bild bearbeitet wird (Objekterkennung, Koordinatenbestimmung und Parallaxenbestimmung) und danach verglichen wird, ob bei den bereits verarbeiteten Bildern eine Diskrepanz mit den Koordinaten und/oder dem virtuellen Objekt im Vergleich mit dem weiteren Bild aufgetreten ist. Wenn ja, kann eine erneute Objekterkennung zumindest mit denjenigen Bildern durchgeführt werden deren Ergebnisse besagte Diskrepanz aufweisen.

Eine erfindungsgemäße Vorrichtung zur Parallaxenbestimmung von Aufnahmen eines Multilinsen-Kamerasystems umfasst die folgenden Komponenten:
- Eine Datenschnittstelle ausgelegt zum Empfang von mindestens zwei Bildern eines Objekts aufgenommen von dem multispektralen Multilinsen-Kamerasystem in unterschiedlichen Spektralbereichen. Eine solche Datenschnittstelle ist bekannt und kann auf einen Datenspeicher zugreifen oder mit einem Netzwerk kommunizieren.
- Eine Erkennungseinheit ausgelegt zur Erkennung des Objekts in den aufgenommenen Bildern mittels digitaler Objekterkennung und zur Erstellung eines virtuellen Objekts aus der erkannten Abbildung des Objekts. Diese Erkennungseinheit kann durch eine Recheneinheit realisiert werden, die Bilddaten verarbeiten kann.
- Eine Ermittlungseinheit ausgelegt zur Ermittlung von Koordinaten des virtuellen Objekts in den Bildern in Form von absoluten Bildkoordinaten und/oder relativer Bildkoordinaten zu anderen Elementen in den Bildern. Diese Ermittlungseinheit kann ebenfalls durch eine Recheneinheit realisiert werden, die Bilddaten verarbeiten kann.
- Eine Parallaxeneinheit ausgelegt zur Bestimmung der Parallaxe des Objekts aus den ermittelten Koordinaten und der bekannten Position der Aufnahmeorte der Bilder auf einem Bildsensor des Multilinsen-Kamerasystems. Diese Parallaxeneinheit kann ebenfalls durch eine Recheneinheit realisiert werden, die Bilddaten verarbeiten kann.

Die Vorrichtung ist dabei dazu ausgelegt, dass nach der Bestimmung der Parallaxe des Objekts diese Parallaxe dazu verwendet wird, für ein Bild einen Verschiebungsvektor zu bestimmen, mit dem das virtuelle Objekt an die Position eines virtuellen Objektes in einem anderen Bild verschoben werden kann, wobei das Bild oder ein weiteres Bild, welches an der betreffenden Stelle des Bildsensors aufgenommen wurde, entsprechend dem Verschiebungsvektor verschoben wird, um die Parallaxe zu kompensieren.

Ein erfindungsgemäßes Multilinsen-Kamerasystem umfasst eine erfindungsgemäße Vorrichtung und/oder ist zur Durchführung eines erfindungsgemäßen Verfahrens ausgelegt.

Im Folgenden werden bevorzugte Ausführungsformen der Erfindung beschrieben. Es wird darauf hingewiesen, dass ein bevorzugtes Multilinsen-Kamerasystem auch analog zu der entsprechenden Beschreibung des Verfahrens ausgestaltet sein kann und insbesondere auch einzelne Merkmale verschiedener Ausführungsbeispiele miteinander kombiniert werden können.

Bevorzugt erfolgt die Erkennung des Objekts mittels Bildsegmentierung und/oder merkmalsbasiert, wobei in beiden Fällen bevorzugt zunächst eine Vorverarbeitung des Bildes erfolgt, insbesondere mittels eines Kantenfilters und/oder mittels Bilderosion, und
- wobei die Bildsegmentierung insbesondere mittels einem Kantenfilter, einem adaptivem Schwellwertfilter und/oder mittels einer Flutfüllung erfolgt und bevorzugt anschließend eine Änhlichkeitsanalyse der Objekte erfolgt, und
- wobei bei der merkmalsbasierten Objekterkennung eine direkte Ähnlichkeitsanalyse anhand des gesamten Bildes oder einer Reihe von Teilen des Bildes durchgeführt wird, insbesondere mittels einer Kreuzkorrelation.

Bevorzugt werden bei der Erkennung des Objekts in einem Bild Informationen zu Elementen und/oder der Position und/oder der Form des Objekts aus einer vorangehenden Erkennung des Objekts in einem anderen Bild verwendet, bevorzugt von einem anderen Bild in der gleichen Zeile oder Spalte auf dem Bildsensor.

Erfindungsgemäß wird nach der Bestimmung der Parallaxe des Objekts diese Parallaxe dazu verwendet, für ein Bild einen Verschiebungsvektor zu bestimmen, mit dem das virtuelle Objekt an die Position eines virtuellen Objektes in einem anderen Bild verschoben werden kann. Erfindungsgemäß wird dabei das Bild oder ein weiteres Bild, welches an der betreffenden Stelle des Bildsensors aufgenommen wurde, entsprechend dem

Verschiebungsvektor verschoben, um die Parallaxe zu kompensieren. Dabei ist bevorzugt, dass zumindest das virtuelle Objekt gemäß dem Verschiebungsvektor verschoben wird und ein anderer Bereich des Bildes nicht oder gemäß eines anderen Verschiebungsvektors verschoben wird. Auf diese Weise können Parallaxen mehrerer Objekte, welche in unterschiedlichem Abstand zur Kamera liegen (oder ein Objekt und der Hintergrund) korrigiert werden. Hierzu ist zu beachten, dass in einigen Bildern Bereiche ohne Bildinformation entstehen können, die vor der Verschiebung verdeckt gewesen sind. Diese können bei einer späteren Auswertung entweder ignoriert werden oder mit Informationen aus zusätzlichen Messungen gefüllt werden.

Bevorzugt wird nach der Bestimmung der Parallaxe des Objekts diese Parallaxe dazu verwendet, den Abstand des Objekts relativ zu einem anderen Element des Motivs (z.B. dem Hintergrund) und/oder zum Multilinsen-Kamerasystem zu berechnen, bevorzugt unter Verwendung eines bekannten Abstandes eines Elements des Bildes.

Aus dem ermittelte Abstand werden bevorzugt Blickwinkel berechnet, unter denen das Objekt in den Bildern dargestellt ist. Dies ist einfach möglich, da die Abbildung des Motivs durch das Kamerasystem auf den Bildsensor bekannt ist und die Positionen der aufgenommenen Bilder auf dem Bildsensor bekannt sind. Zusammen mit der in den Bildern gemessenen Intensität von Bildpunkten des Objekts kann dann eine Abstrahlcharakteristik des Objekts bestimmt werden, in dem die Intensität mit den Blickwinkel in Relation gesetzt wird, z.B. einfach aufgetragen wird. Zwar wird das Objekt in den Bildern zumeist in unterschiedlichen Spektralkanälen dargestellt, jedoch kann im einfachsten Fall angenommen werden, dass die Abstrahlcharakteristik für alle Wellenlängen gleich ist und die (wellenlängenabhängige) Intensität je Kanal könnte mit dem bekannten Spektrum des Objekts normiert werden. Alternativ kann natürlich das Objekt im gleichen Kanal aus zwei oder mehr Blickwinkeln aufgenommen werden und eine Normierung der Intensität der Spektralkanäle daraus erfolgen.

Aus den Blickwinkeln, unter denen ein Objekt (oder ein Pixel) in unterschiedlichen Spektralbereichen gesehen wird, also an unterschiedlichen Bereichen des Bildsensors kann somit die Abstrahlcharakteristik des Objekts (oder von Pixeln des Bildes) ermittelt werden. Dabei kann die Intensität des Objekts (oder Pixels) in unterschiedlichen Kanälen aufgenommen und gegen den Blickwinkel aufgetragen werden. Insbesondere wird die Auftragung in Form einer bidirektionalen Reflektionsverteilungsfunktion vorgenommen (engl.: Bidirectional reflectance distribution fuction, BRDF). Dieser Blickwinkel ergibt sich dabei z.B. aus dem Ort auf dem Bildsensor. Besonders bevorzugt ist es, wenn das Objekt (Pixel) aus zwei unterschiedlichen Blickwinkeln der Kamera betrachtet wird.

Bevorzugt wird eine Dispersionskorrektur von Aufnahmen eines Multilinsen-Kamerasystems durchgeführt. Diese umfasst die folgenden Schritte:
- Ermittlung der spektralen Sensitivität ("Farbfeld") für einen Bereich eines Filterelements des Multilinsen-Kamerasystems, welcher einem vorbestimmten Bereich eines Bildsensors des Multilinsen-Kamerasystems zugeordnet ist, bevorzugt auf Basis der Ergebnisse der Parallaxenbestimmung,
- Bestimmung der Zentralwellenlänge für mindestens zwei Pixel des vorbestimmten Bereichs des Bildsensors basierend auf dem ermittelten Farbfeld,
- Kalibration des Bereichs des Bildsensors und/oder von Bildern, die mit diesem Bereich des Bildsensors aufgenommen worden sind, basierend auf den bestimmten Zentralwellenlängen.

Bevorzugt wird das erfindungsgemäße Verfahren auf Bilder angewandt, die zu unterschiedlichen Zeitpunkten und unterschiedlichen Kamera- oder Objektpositionen im selben Spektralbereich angefertigt worden sind, z.B. eine Videosequenz. Auf diese Weise lassen sich zusätzliche Informationen zur Parallaxe gewinnen (bevorzugt durch das bekannte Prinzip des "Video-Tracking"). Des Weiteren lassen sich Informationen zu Bereichen gewinnen, die in einigen Bildern durch das Objekt verdeckt werden. Zudem lassen sich weitere Informationen zur dreidimensionalen Struktur des Objektes gewinnen.

Gemäß einer bevorzugten Ausführungsform umfasst das Filterelement einen Mosaik-Filter. Bevorzugt ist das Mosaik des Mosaik-Filters so angeordnet, dass große Wellenlängenschritte innen sind, während kleinere Intervalle außen sind. Bei einer bevorzugten Form des Mosaik-Filters ist ein Farbmosaik, insbesondere ein Farbglasmosaik, auf einer Seite eines Substrats, bevorzugt Glas, aufgebracht, insbesondere aufgedampft. Gemäß einer vorteilhaften Ausführungsform ist auf der Vorderseite eines Substrats das Filterelement (ein Mosaik-Filter oder ein anderer Filter) aufgebracht und auf der Rückseite des Substrats die Linsenmatrix (z.B. aufgeprägt). Bevorzugt transmittiert ein Mosaik-Filter für jede Einzellinse eine andere Wellenlänge.

Gemäß einer bevorzugten Ausführungsform umfasst das Filterelement einen linearvariablen Filter mit Filterlinien ("Verlaufsfilter"), welcher bevorzugt im Hinblick auf die Ausrichtung der Filterlinien bezüglich der Linsenmatrix in einem Winkel zwischen 1° und 45° verdreht ist. Alternativ oder zusätzlich umfasst das Filterelement eine Filtermatrix, besonders bevorzugt einen Mosaik-Filter.

Gemäß einer bevorzugten Ausführungsform umfasst das Multilinsen-Kamerasystem eine Aperturmaske zwischen Linsenmatrix und Bildsensor, wobei Aperturen auf der Aperturmaske entsprechend den Linsen der Linsenmatrix positioniert sind und die Aperturmaske so positioniert ist, dass Licht der Abbildungen der einzelnen Linsen durch Aperturen der Aperturmaske tritt. Die Aperturmaske weist also das gleiche Muster wie die Linsenmatrix auf, wobei statt der Linsen dort Aperturen vorliegen.

Zur Verbesserung der Ergebnisse bei der Parallaxenbestimmung bzw. der damit verbundenen Kompensation oder Abstandsermittlung können noch weitere Kalibrationsschritte erfolgen, die auch unabhängig von der Parallaxenbestimmung einen Vorteil für Aufnahmen mit einem ein Multilinsen-Kamerasystem darstellen. Hier ergibt sich das Problem, dass ein nicht optimal kalibriertes Multilinsen-Kamerasystem nicht optimale Aufnahme liefert. Eine Kalibration mit jedem einzelnen der nachfolgenden alternativen Möglichkeiten, alleine oder in Kombination miteinander, verbessert die Aufnahme eines Multilinsen-Kamerasystems.

Ein bevorzugtes Kalibrationsverfahren für ein multispektrales Multilinsen-Kamerasystem dient der Identifikation einer interessierenden Region (engl: Region of Interest oder kurz: ROI). Es umfasst die folgenden Schritte:
- Aufnahme eines Bildes mit dem multispektralen Multilinsen-Kamerasystem, wobei dieses Bild bevorzugt eine uniforme Helligkeitsverteilung aufweist bzw. eine so große Helligkeit aufweist, dass eine Überbelichtung des Bildsensors auftritt. Eine Überbelichtung hat den Vorteil, dass in diesem Falle Regionen in einem aufgenommenen Bild sichtbar werden, die durch Abschirmungseffekte (z.B. durch Aperturränder) weniger Licht erhalten. Diese Bereiche sollten nicht mehr zur ROI dazugehören, da nicht sichergestellt ist, dass die Bildinformationen hier optimal sind (durch die Abschirmungseffekte). Es ergibt sich ein Bild, bei dem jeweils nur der für die ROI sichtbare Bereich beleuchtet ist.
- Kreuzkorrelation des Bildes mit einem Vergleichsbild, insbesondere mit einem Referenzbild (z.B. einem Idealsensorbild).
- Optional: Durchführung einer Hough-Transformation. Mittels dieser Hough-Transformation können die Winkel der Bilder in Übereinstimmung gebracht werden.
- Auswahl desjenigen Bereichs aus den Bildern, der gemäß der Autokorrelation und/oder Kreuzkorrelation die höchste Ähnlichkeit aufweist. Diese Auswahl umfasst bevorzugt eine Vereinzelung des ausgewählten Bereichs oder eine Begrenzung eines Bildausschnitts auf diesen ausgewählten Bereich. Bevorzugt erfolgt in diesem Rahmen eine entsprechende vorbestimmte Definition im Referenzbild oder des Referenzbildes und eine Objektsegmentierung des aufgenommenen Bildes.

Ein bevorzugtes Kalibrationsverfahren für ein multispektrales Multilinsen-Kamerasystem dient der Korrektur von Linsenfehlern. Es umfasst die folgenden Schritte:
- Aufnahme eines Bildes eines vorbekannten Optik-Targets abgebildet durch eine zu überprüfende Linse des Multilinsen-Kamerasystems. Es ist dabei bevorzugt, dass eine Aufnahme jedes Kanals des Multilinsen-Kamerasystems erfolgt, damit das gesamte System auf Linsenfehler untersucht werden kann.
- Berechnung der optischen Linsenfehler basierend auf diesen Aufnahmen und den bekannten Maßen des Optik-Targets, bevorzugt mit einem Levenberg-Marquard-Algorithmus mittels der bestimmten Linsenparameter.

Ein bevorzugtes Kalibrationsverfahren für ein multispektrales Multilinsen-Kamerasystem dient der Kalibrierung von Projektionsfehlern. Es umfasst die folgenden Schritte:
- Bereitstellung eines Bildes (Aufnahme oder Auslesen aus einem Datenspeicher) eines vorbekannten Optik-Targets mit dem (multispektralen) Multilinsen-Kamerasystem.
- Erkennung des Targets im Bild und bevorzugt Ermittlung von mindestens drei Koordinaten von charakterisierenden Punkten des Targets. Charakterisierende Punkte sind z.B. Ecken des Targets.
- Anwenden einer inversen Homographie. Dies ist eine eine Kollineation des 2-dimensionalen reellen projektiven Raumes auf sich, also eine Bildprojektion im Raum, die von einem Algorithmus mit einem (digitalen) Bild durchgeführt werden kann. Dabei wird eine Anpassung des Targets an ein Target vorgenommen, wie es unter einem bestimmten Abstand ohne Projektionsfehler abgebildet werden würde. Eine solche ideale Abbildung ist bekannt, da die Eigenschaften der Abbildungsoptik bekannt sind und das Target bekannt ist. Bevorzugt werden dabei nur Koordinaten von charakterisierenden Referenzpunkten verwendet und Koordinaten der entsprechenden charakterisierenden Punkte des im Bild erkannten Targets auf die Referenzpunkte registriert. Dieses bevorzugte Verfahren erlaubt durch die Verwendung der Homographie eine Korrektur der Translation (Verschiebung), Rotation, Scherung und Skalierung.

Ein bevorzugtes Kalibrationsverfahren für ein multispektrales Multilinsen-Kamerasystem dient der Verbesserung dessen Auflösung. Es umfasst die folgenden Schritte:
- Aufnahme von mindestens zwei Bildern, wobei verglichen mit dem jeweils anderen Bild ein Bild eine höhere Ortsauflösung hat und das andere Bild eine höhere spektrale Auflösung hat. Es wird dabei bevorzugt eine Vielzahl von Bildern niedriger Ortsauflösung in unterschiedlichen Spektralbereichen und ein Pan-Bild bzw. ein Graustufenbild mit einer höheren Ortsauflösung aufgenommen. Die Bilder können von einem ersten System mit hoher Ortsauflösung und geringer spektralen Auflösung einem zweiten System mit geringer Ortsauflösung und hoher spektraler Auflösung aufgenommen werden oder von einem einzigen System, welches beide Eigenschaften verbindet.

Optional kann das Multilinsen-Kamerasystem noch zusätzlich kalibriert werden, insbesondere mit einem vorangehend beschriebenen Verfahren zur Kalibrierung von Projektionsfehlern. Besonders bevorzugt erfolgt vorher eine Bestimmung der Parallaxe von Objekten in den Bildern und eine Kompensation der Parallaxe.
- Extrapolation eines räumlich oder spektral hochauflösdenden Bildes aus den mindestens zwei Bildern. Dabei wird die höhere Ortsauflösung des einen Bildes dazu verwendet die Ortsauflösung des Bildes mit der höheren spektralen Auflösung zu verbessern und/oder die höhere spektralen Auflösung des anderen Bildes wird dazu verwendet die spektralen Auflösung des Bildes mit der höheren Ortsauflösung zu verbessern.

Insbesondere wird in der bevorzugten Vielzahl von Einzelkanälen (Spektralbildern) die Ortsauflösung basierend auf den Informationen des Bildes mit der höheren Ortsauflösung vergrößert. Dabei wird bevorzugt das bekannte Prinzip des Pan-Sharpening angewandt. In diesem Rahmen wird ausgenutzt, dass, wenn man das Motiv betrachtet, zu einem Pixel eines Bildes eines Spektralkanals eine Gruppe von Pixeln des Bildes mit der höheren Ortsauflösung gehört, z.B. 10x10 Pixel aus dem Pan-Bild. Es wird nun bevorzugt aus einem Pixel eines (Spektral-) Bildes eine entsprechende Gruppe von Pixeln erzeugt (z.B. 10x10 spektrale Pixel), indem die Form des Spektrums aus dem ursprünglichen Spektralpixel verwenden wird, die Helligkeit jedoch vom Pan-Bild.

Alternativ oder ergänzend kann die spektrale Auflösung des Bildes mit der höheren Ortsauflösung verbessert werden. Existiert wie oben gesagt ein erstes Bild mit einer höheren Ortsauflösung und einer geringeren spektralen Auflösung (es müssen jedoch mehr als drei Kanäle vorhanden sein) und ein zweites Bild mit einer geringeren Ortsauflösung und einer höheren spektralen Auflösung, ist dies möglich. Die spektrale Auflösung des ersten Bildes wird verbessert, so dass (nahezu) eine spektrale Auflösung des zweiten Bildes erreicht wird, indem man die fehlenden spektralen Kanäle für das erste Bild aus den Informationen des zweiten Bildes interpoliert. Dies erfolgt bevorzugt dadurch dass ein Pixel des zweiten Bildes einer zusammenhängenden Pixelgruppe des ersten Bildes zugeordnet wird und dieser Pixelgruppe die spektrale Informationen des Pixels des zweiten Bildes zugeordnet wird. Dies kann z.B. so erfolgen, dass bei einer Z-mal größeren räumlichen Auflösung des ersten Bildes jeder Block aus Z x Z Pixeln des ersten Bildes (Pixelgruppe) einem Pixel des zweiten Bildes an der entsprechenden (die Blöcke berücksichtigenden) Bildposition zugeordnet wird.

Das Ergebnis kann jedoch noch verbessert werden, indem eine Objekterkennung innerhalb des ersten Bildes (bzw. in den Pixelgruppen) erfolgt. Dabei wird die Annahme zugrundegelegt, dass die Spektren innerhalb eines Objekts annähernd homogen sind. Die Objekterkennung kann noch mit Informationen des zweiten Bildes verbessert werden, in dem Teile von Objekten mit unterschiedlichen Spektren voneinander separiert und als eigenständige Objekte behandelt werden. Es können danach z.B. unterschiedliche aneinander grenzende Bereiche im ersten Bild vorliegen, die durch Kanten voneinander getrennt sind. Nun werden innerhalb einer Pixelgruppe im ersten Bild Bereiche unterschiedlicher Objekte unterschiedlich behandelt, indem diesen unterschiedliche Spektren zugewiesen werden. Bei homogenen Pixelgruppen ist es einfach: diesen wird die spektrale Information des entsprechenden Pixels des zweiten Bildes zugewiesen (s. vorangehendes Verfahren). Befinden sich in einer Pixelgruppe Teile unterschiedlicher Objekte, so werden für das eine Objekt die spektralen Informationen des zweiten Bildes für dieses eine Objekt verwendet und für das andere Objekt die spektralen Informationen des zweiten Bildes für dieses andere Objekt. Für jedes weitere Objektteil wird entsprechend verfahren. Da in diesem Falle die spektralen Informationen des entsprechenden Pixels im zweiten Bild eine Faltung unterschiedlicher Objekt-Spektren sein könnten, können hier die Spektren benachbarter Pixel im zweiten Bild hinzugezogen werden, die Informationen zu den betreffenden Objekten enthalten. Alternativ oder ergänzend kann eine zusätzliche Objekterkennung im zweiten Bild erfolgen, welchen den Objekten des ersten Bildes entsprechen und diesen Objekten aus den Informationen des zweiten Bildes entsprechende Spektralinformationen zugewiesen werden.

Wenn die Farbkanäle jeweils nicht homogen sind (also die Zentralwellenlänge für die Pixel in einem Kanal (Bild) über die Bildebene hinweg jeweils einem Verlauf folgt), können diese Informationen zusätzlich zu einer Verbesserung des Spektrums dienen. Hierzu wird wieder von der Annahme ausgegangen, dass innerhalb eines Objektes das Spektrum homogen ist, zumindest bezüglich zweier benachbarter Punkte innerhalb des Objekts. Bei nicht-homogenen Farbkanälen wird das Spektrum zweier benachbarter Pixel bei Aufnahme eines homogenen Motivs leicht differieren. Das eine Pixel "sieht" das Motiv mit der Wellenlänge w. das zweite mit der Wellenlänge w±Δw. Stellt man nun in einem Bild fest, dass die beiden Pixel ein (als homogen angenommenes) Objekt darstellen, so kann diesem Objekt nicht nur die Wellenlänge w, sondern auch die Wellenlänge w±Δw zugeordnet werden und das Spektrum des Objekts diesbezüglich verfeinert werden.

In einem beispielhaften Fall, in dem das eine Bild eine Ortsauflösung von 50x50 Pixeln und eine spektrale Auflösung von 500 Kanälen hat und das andere Bild eine Ortsauflösung von 500x500 Pixeln und eine spektrale Auflösung von 10 Kanälen, so könnte die Ortsinformation eines resultierenden Bildes mittels (Teil-)Pan-Sharpening auf 500x500 gebracht werden, und das Spektrum mittels "Spektralsharpening" auf 500, das Ergebnis wäre eine Ortsauflösung von 500x500 Pixeln bei einer spektralen Auflösung von 500 Kanälen.

Das folgende Verfahren kann sehr einfach mit dem vorangehend beschriebenen kombiniert werden, benötigt jedoch in seiner grundsätzlichen Form nicht zwingend zwei Bilder. Auch aus einem einzelnen Bild kann eine genauere spektrale Information ermittelt werden.

Bevorzugt werden zu jedem Spektrum eines Pixels die Spektren zumindest der direkt benachbarten Pixel hinzugefügt. Diese benachbarten Spektren beinhalten, wie gesagt, andere Wellenlängeninformationen (andere Stützstellen wegen anderer Zentralwellenlängen). Dieses einfache Verfahren erhöht zwar die Auflösung der Spektren, kann jedoch in den Übergangsbereichen zwischen unterschiedlichen Objekten eines Motivs zu Fehlern führen.

Das Ergebnis kann auch hier noch verbessert werden, indem eine Objekterkennung innerhalb des Bildes erfolgt. Dabei wird wieder die Annahme zugrundegelegt, dass die Spektren innerhalb eines Objekts annähernd homogen sind. Sollten die Spektren innerhalb eines Objekts stark differieren, kann auch wieder eine Objektsegmentierung durchgeführt werden in dem Teile von Objekten mit unterschiedlichen Spektren voneinander separiert und als eigenständige Objekte behandelt werden. Es können danach z.B. unterschiedliche aneinander grenzende Bereiche im Bild vorliegen, die durch Kanten voneinander getrennt sind. Nun werden die Spektren von Pixeln innerhalb eines Objekts, insbesondere den Pixeln aus dem Zentrum des Objekts miteinander vereinigt. Diese Vereinigung kann darin bestehen, dass die Spektren jeweils benachbarter Pixel vereinigt werden oder auch die Spektren aller Pixel. Ersteres ergibt selbst bei leicht inhomogenen Objekten eine annehmbare Verbesserung, das zweite bei homogenen Objekten eine sehr große Auflösung. Beide Alternativen können miteinander kombiniert werden, in dem ein Objekt in konzentrische Bereiche unterteilt wird und die Spektren der Pixel dieser Bereiche kombiniert werden.

Bevorzugte weitere Kalibrationsverfahren für ein multispektrales Multilinsen-Kamerasystem sind bekannte Verfahren zur Kalibration des Dunkelstroms und/oder Kalibrationen zum Weißabgleich und/oder eine radiometrische Kalibrierung und/oder eine Kalibration im Rahmen der Photo Response Non Uniformity ("PRNU").

Beispiele für bevorzugte Ausführungsformen der erfindungsgemäßen Vorrichtung sind in den Abbildungen schematisch dargestellt.
Figur 1 zeigt ein Multilinsen-Kamerasystem gemäß dem Stand der Technik.
Figur 2 zeigt eine Szene einer Aufnahme.
Figur 3 zeigt von oben eine Szene einer Aufnahme und ein Multilinsen-Kamerasystem mit einem Ausführungsbeispiel einer erfindungsgemäßen Vorrichtung.
Figur 4 zeigt ein Beispiel für ein aufgenommenes Bild.
Figur 5 zeigt ein weiteres Beispiel für ein aufgenommenes Bild.
Figur 6 zeigt ein weiteres Beispiel für ein aufgenommenes Bild.
Figur 7 zeigt ein Beispiel für ein resultierendes Bild.
Figur 8 zeigt ein beispielhaftes Blockdiagramm für das erfindungsgemäße Verfahren.

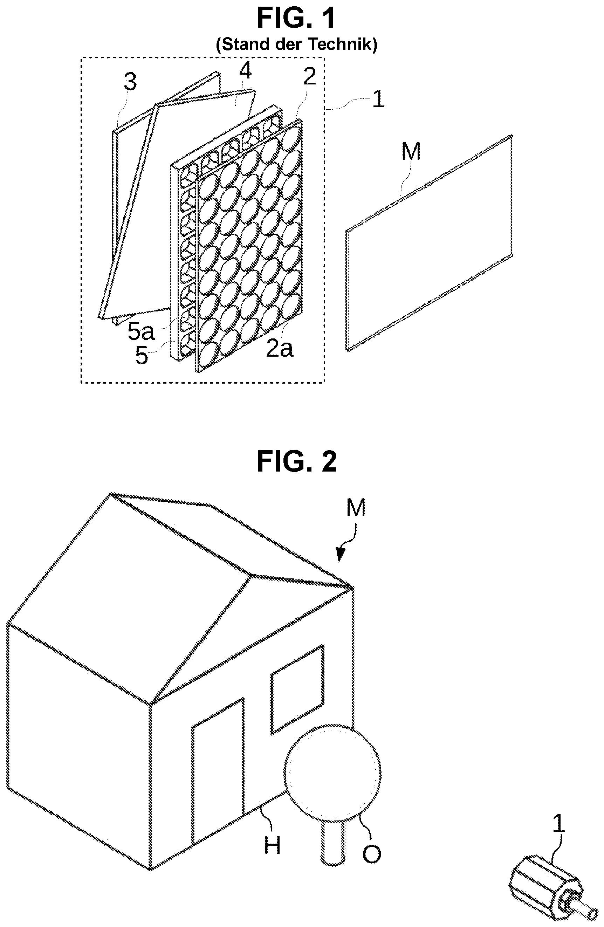

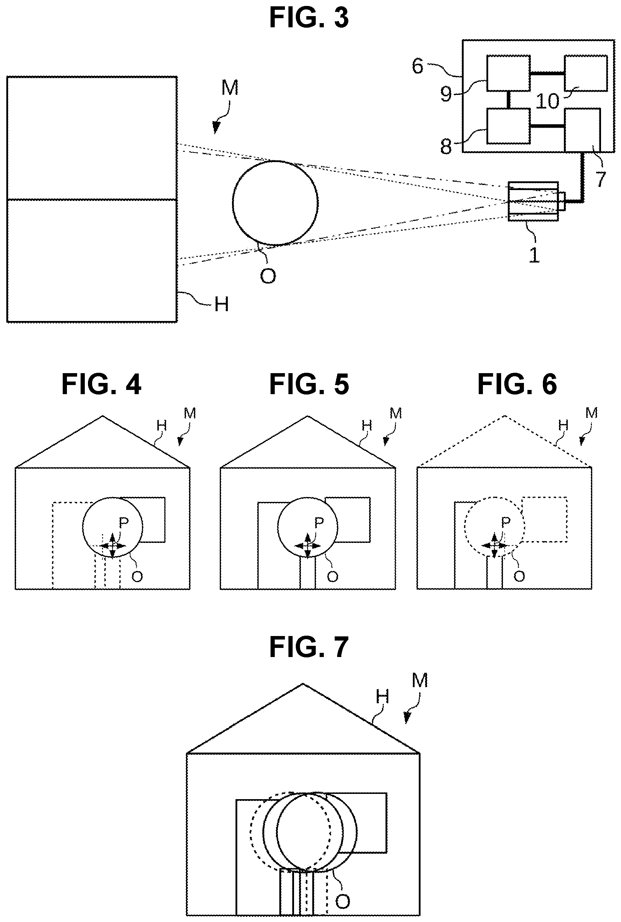

Figur 1 zeigt schematisch ein Multilinsen-Kamerasystem 1 zur hyperspektralen Aufnahme von Bildern gemäß dem Stand der Technik in einer perspektivischen Darstellung. Das Multilinsen-Kamerasystem 1 umfasst einen flächigen Bildsensor 3, und eine flächige Linsenmatrix 2 aus gleichförmigen Einzellinsen 2a, welche so angeordnet ist, dass sie von einem Motiv M eine Vielzahl von rasterförmig angeordneten ersten Abbildungen AS (s. z.B. ausschließlich die kleinen ersten Abbildungen AS in Figur 5) auf dem Bildsensor 3 erzeugt. Der Übersicht halber ist nur eine der Einzellinsen 2a mit einem Referenzzeichen versehen.

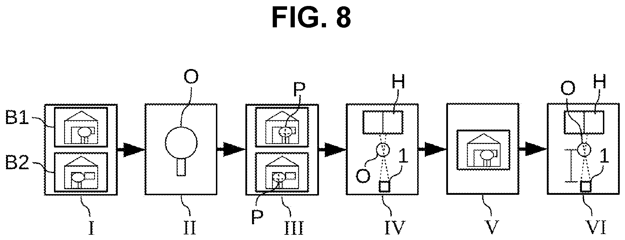

Zur Verbesserung der Qualität der ersten Abbildungen AS ist eine Aperturmaske 5 zwischen Bildsensor 3 und Linsenmatrix 2 angeordnet. Jede Apertur 5a der Aperturmaske 5, ist einer Einzellinse 2a zugeordnet und genau hinter dieser angeordnet. Zum Erhalt der spektralen Informationen ist ein Filterelement 4 zwischen Aperturmaske 5 und Bildsensor 3 angeordnet. Dieses Filterelement 4 kann in anderen Ausführungen auch vor der Linsenmatrix angeordnet sein (s. z.B. Figur 8). In dem hier dargestellten Fall handelt es sich bei dem Filterelement 4 um einen linearvariablen Filter, der gegenüber dem Bildsensor etwas verdreht ist. Jede Abbildung hat damit ihren Mittelpunkt bei einem anderen Längenwellenbereich des Filterelements. Somit liefert jede erste Abbildung AS auf dem Bildsensor eine andere spektrale Information und die Gesamtheit der ersten Abbildungen AS dient zur Erstellung eines Bildes mit spektralen Informationen.

Figur 2 zeigt eine Szene einer Aufnahme eines Motivs M. Dieses Motiv umfasst ein Haus, welches hier als Hintergrundobjekt H dient (also als ein weiteres Objekt oder als Hintergrund) und einen Baum als Objekt O im Vordergrund. Dieses Motiv wird durch ein Multilinsen-Kamerasystem 1 aufgenommen.

Figur 3 zeigt das Motiv M aus Figur 2 von oben. Das Multilinsen-Kamerasystem 1 umfasst hier ein Ausführungsbeispiel einer erfindungsgemäßen Vorrichtung 6. Diese Vorrichtung umfasst eine Datenschnittstelle 7, eine Erkennungseinheit 8, eine Ermittlungseinheit 9 und eine Parallaxeneinheit 10.

Die Datenschnittstelle 7 ist zum Empfang von den Bildern ausgelegt, die von dem Multilinsen-Kamerasystem 1 aufgenommen worden sind. Diejenigen Bilder, die in unterschiedlichen Spektralbereichen aufgenommen worden sind, sind gleichzeitig an unterschiedlichen Stellen des Bildsensors 3 des Multilinsen-Kamerasystems 1 aufgenommen worden (s. z.B. Figur 1). Dadurch sehen sie das Motiv aus leicht unterschiedlichen Blickwinkeln, was mit den gestrichelten und strichpunktierten Linien verdeutlicht werden soll.

Die Erkennungseinheit 8 ist zur Erkennung des Objekts O in den aufgenommenen Bildern mittels digitaler Objekterkennung und zur Erstellung eines virtuellen Objekts O aus der erkannten Abbildung des Objekts O ausgelegt. Der im Motiv enthaltene Baum wird also als Objekt O erkannt und als solches von der Vorrichtung 6 im Weiteren Verlauf behandelt.

Die Ermittlungseinheit 9 ist zur Ermittlung von Koordinaten des virtuellen Objekts O in den Bildern in Form von absoluten Bildkoordinaten und/oder relativer Bildkoordinaten zu anderen Elementen in den Bildern ausgelegt.

Die Parallaxeneinheit 10 ist zur Bestimmung der Parallaxe des Objekts O aus den ermittelten Koordinaten und der bekannten Position der Aufnahmeorte der Bilder auf einem Bildsensor 3 des Multilinsen-Kamerasystems 1 ausgelegt.

Figuren 4, 5 und 6 zeigen Beispiele für jeweils ein aufgenommenes Bild. Diese Bilder wurden unter unterschiedlichen Aufnahmewinkeln und in unterschiedlichen Spektralkanälen aufgenommen. Betrachtet man die Bilder genauer, so ist erkennbar, dass der Baum, also das Objekt O, in den Bildern jeweils leicht verschoben ist. In der Mitte des Baumes ist der Objektmittelpunkt P mit einem Koordinatenkreuz markiert. Geht man davon aus, dass der Baum bei dem mittleren Bild (Figur 5) an einer Ursprungskoordinate liegt, so ist sein Objektmittelpunkt P im linken Bild (Figur 4) ein wenig nach rechts verschoben und im rechten Bild (Figur 6) ein wenig nach links (s. Lage des Koordinatenkreuzes des Baumes relativ zu dem gestrichelten Kreuz, das den Objektmittelpunkt P relativ zum Haus im mittleren Bild (Figur 5) repräsentiert).

Die gestrichelten Bereiche des Motivs sollen andeuten, dass in den unterschiedlichen Spektralkanälen nicht unbedingt alle Elemente des Motivs (gleich gut) erkennbar sind. So ist in diesem Beispiel im mittleren Bild (Figur 5) sowohl das Haus als auch der Baum komplett erkennbar. Im linken Bild (Figur 4) sind die Tür des Hauses und der Stamm des Baumes nicht erkennbar oder werden anders dargestellt. Im rechten Bild (Figur 6) sind Dach und Fenster des Hauses und die Krone des Baumes nicht erkennbar oder werden anders dargestellt. Der Objektmittelpunkt P kann trotzdem in jedem Bild ermittelt werden, da dieser aus den erkennbaren Teile des Objekts O eindeutig bestimmt werden kann.

Figur 7 zeigt ein Beispiel für ein resultierendes Bild aus den Aufnahmen nach den Figuren 4, 5 und 6. Da die Position des Objekts O (Baum) relativ zum Hintergrundobjekt H (Haus) variiert, scheint es viele Objekte O in unterschiedlichen Spektralkanälen von dem Haus zu geben. Genau dieser Effekt kann durch das erfindungsgemäße Verfahren unterbunden werden und man sieht ein Bild mit nur einem Objekt (ähnlich der Figuren 4, 5 und 6 nur in allen Spektralkanälen).

Figur 8 zeigt ein beispielhaftes Blockdiagramm für das erfindungsgemäße Verfahren zur Parallaxenbestimmung von Aufnahmen eines Multilinsen-Kamerasystems 1.

In Schritt I erfolgt eine Aufnahme (oder ggf. eine Bereitstellung) von einem ersten Bild B1 und einem zweiten Bild B2 jeweils desselben Motivs mit einem Objekt O (s. z.B. vorangehende Figuren) aufgenommen von dem multispektralen Multilinsen-Kamerasystem in unterschiedlichen Spektralbereichen. Die beiden Bilder stehen stellvertretend für eine Vielzahl von aufgenommenen Bildern. Das Objekt O wird bei dem ersten Bild B1 und dem zweiten Bild B2 relativ zu einem anderen Objekt (z.B. einem Hintergrundobjekt H), wie bei den Bildern der Figuren 4,5 und 6 dargestellt, etwas verschoben sein, da es aus unterschiedlichen Winkeln aufgenommen worden ist.

In Schritt II erfolgt eine Erkennung des Objekts O in dem ersten Bild B1 und dem zweiten Bild B2 mittels digitaler Objekterkennung, z.B. einer Kantenerkennung. Diejenigen Pixel, welche dem Objekt O zugeordnet werden, werden zu jeweils einem virtuellen Objekt O zusammengefasst (im ersten Bild B1 und im zweiten Bild B2).

In Schritt III erfolgt eine Ermittlung von Koordinaten des virtuellen Objekts in den Bildern. Dies kann z.B. der oben erwähne Bildmittelpunkt P sein (s. z.B. Figuren 4, 5, oder 6). Die Koordinaten können in Form von absoluten Bildkoordinaten oder relativer Bildkoordinaten (z.B. zum Hintergrundobjekt H) ermittelt werden.

In Schritt IV erfolgt eine Bestimmung der Parallaxe des Objekts O aus den ermittelten Koordinaten und der bekannten Position der Aufnahmeorte der Bilder auf einem Bildsensor des Multilinsen-Kamerasystems 1.

In Schritt V werden dann im zweiten Bild B2 die Pixel des virtuellen Objekts basierend auf der nun bekannten Parallaxe so verschoben, dass das virtuelle Objekt O des zweiten Bildes B2 über dem virtuellen Objekt O des ersten Bildes B1 zu liegen kommt.

In Schritt VI wird zudem noch der Abstand des Objekts O von dem Multilinsen-Kamerasystem 1 basierend auf einem bekannten Abstand (z.B. dem bekannten Abstand des Multilinsen-Kamerasystems 1 von einem Hintergrundobjekt H) berechnet.

Abschließend wird angemerkt, dass die Verwendung der unbestimmten Artikel, wie z.B. "ein" oder "eine", nicht ausschließt, dass die betreffenden Merkmale auch mehrfach vorhanden sein können. So kann "ein" auch als "mindestens ein" gelesen werden. Begriffe wie "Einheit" oder "Vorrichtung" schließen nicht aus, dass die betreffenden Elemente aus mehreren zusammenwirkenden Komponenten bestehen können, die nicht unbedingt in einem gemeinsamen Gehäuse untergebracht sind, auch wenn der Fall eines umfassenden Gehäuses bevorzugt ist. Im Bereich der Optik kann insbesondere das Element der Linse aus einer einzelnen Linse oder einem System von Linsen oder einem Objektiv bestehen ohne dass dies einer genauen Differenzierung bedarf.

### Bezugszeichenliste

- 1: Multilinsen-Kamerasystem
- 2: Linsenmatrix
- 2a: Einzellinse
- 3: Bildsensor
- 4: Filterelement
- 5: Aperturmaske
- 5a: Apertur
- 6: Vorrichtung
- 7: Datenschnittstelle
- 8: Erkennungseinheit
- 9: Ermittlungseinheit
- 10: Parallaxeneinheit
- B1: erstes Bild
- B2: zweites Bild
- H: Hintergrundobjekt
- M: Motiv
- O: Objekt
- P: Objektmittelpunkt

## Patentansprüche

1. Verfahren zur Parallaxenbestimmung von Aufnahmen eines Multilinsen-Kamerasystems (1), wobei eine Parallaxe eines Objekts (O) in von dem multispektralen Multilinsen-Kamerasystem (1) aufgenommenen Bildern (B1, B2) bestimmt wird, das Verfahren umfassend die Schritte:
- Aufnahme und/oder Bereitstellung von mindestens zwei Bildern (B1, B2) eines Objekts (O) aufgenommen von dem multispektralen Multilinsen-Kamerasystem (1) in unterschiedlichen Spektralbereichen,
- Erkennung des Objekts (O) in den aufgenommenen Bildern (B1, B2) mittels digitaler Objekterkennung und Erstellung eines virtuellen Objekts (O) aus der erkannten Abbildung des Objekts (O),
- Ermittlung von Koordinaten des virtuellen Objekts (O) in den Bildern (B1, B2) in Form von absoluten Bildkoordinaten und/oder relativer Bildkoordinaten zu anderen Elementen in den Bildern (B1, B2),
- Bestimmung der Parallaxe des Objekts (O) aus den ermittelten Koordinaten und der bekannten Position der Aufnahmeorte der Bilder (B1, B2) auf einem Bildsensor (3) des Multilinsen-Kamerasystems (1),
wobei nach der Bestimmung der Parallaxe des Objekts (O) diese Parallaxe dazu verwendet wird, für ein Bild (B1, B2) einen Verschiebungsvektor zu bestimmen, mit dem das virtuelle Objekt (O) an die Position (P) eines virtuellen Objektes (O) in einem anderen Bild (B1, B2) verschoben werden kann, wobei das Bild (B1, B2) oder ein weiteres Bild, welches an der betreffenden Stelle des Bildsensors aufgenommen wurde, entsprechend dem Verschiebungsvektor verschoben wird, um die Parallaxe zu kompensieren.

2. Verfahren nach Anspruch 1, **dadurch gekennzeichnet, dass** die Erkennung des Objekts (O) mittels Bildsegmentierung und/oder merkmalsbasiert erfolgt, wobei in beiden Fällen bevorzugt zunächst eine Vorverarbeitung des Bildes (B1, B2) erfolgt, insbesondere mittels eines Kantenfilters und/oder mittels Bilderosion, und
- wobei die Bildsegmentierung insbesondere mittels einem Kantenfilter, einem adaptivem Schwellwertfilter und/oder mittels einer Flutfüllung erfolgt und bevorzugt anschließend eine Änhlichkeitsanalyse der virtuellen Objekte (O) erfolgt, und
- wobei bei der merkmalsbasierten Objekterkennung eine direkte Ähnlichkeitsanalyse anhand des gesamten Bildes (B1, B2) oder einer Reihe von Teilen des Bildes (B1, B2) durchgeführt wird, insbesondere mittels einer Kreuzkorrelation.

3. Verfahren nach einem der vorangehenden Ansprüche, **dadurch gekennzeichnet, dass** bei der Erkennung des Objekts (O) in einem Bild (B1, B2) Informationen zu Elementen und/oder der Position (P) und/oder der Form des Objekts (O) aus einer vorangehenden Erkennung des Objekts (O) in einem anderen Bild (B1, B2) verwendet werden, bevorzugt von einem anderen Bild (B1, B2) in der gleichen Zeile oder Spalte auf dem Bildsensor (3).

4. Verfahren nach einem der vorangehenden Ansprüche, **dadurch gekennzeichnet, dass** zumindest das virtuelle Objekt (O) gemäß dem Verschiebungsvektor verschoben wird und ein anderer Bereich des Bildes (B1, B2) nicht oder gemäß eines anderen Verschiebungsvektors verschoben wird.

5. Verfahren nach einem der vorangehenden Ansprüche, **dadurch gekennzeichnet, dass** nach der Bestimmung der Parallaxe des Objekts (O) diese Parallaxe dazu verwendet wird, den Abstand des Objekts (O) relativ zu einem anderen Element eines Motivs (M) und/oder zum Multilinsen-Kamerasystem (1) zu berechnen, bevorzugt unter Verwendung eines bekannten Abstandes eines Elements des Bildes (B1, B2).

6. Verfahren nach Anspruch 5, **dadurch gekennzeichnet, dass** aus dem ermittelte Abstand Blickwinkel berechnet werden, unter denen das Objekt in den Bildern dargestellt ist und zusammen mit der in den Bildern gemessenen Intensität von Bildpunkten des Objekts eine Abstrahlcharakteristik des Objekts bestimmt wird.

7. Verfahren nach einem der vorangehenden Ansprüche, **dadurch gekennzeichnet, dass** eine Dispersionskorrektur von Aufnahmen eines Multilinsen-Kamerasystems (1) durchgeführt wird, umfassend die folgenden Schritte:
- Ermittlung der spektralen Sensitivität für einen Bereich eines Filterelements des Multilinsen-Kamerasystems (1), welcher einem vorbestimmten Bereich eines Bildsensors (3) des Multilinsen-Kamerasystems (1) zugeordnet ist, bevorzugt auf Basis der Ergebnisse der Parallaxenbestimmung,
- Bestimmung der Zentralwellenlänge für mindestens zwei Pixel des vorbestimmten Bereichs des Bildsensors (3) basierend auf der ermittelten spektralen Sensitivität des Bereichs ,
- Kalibration des Bereichs des Bildsensors (3) und/oder von Bildern (B1, B2), die mit diesem Bereich des Bildsensors (3) aufgenommen worden sind, basierend auf den bestimmten Zentralwellenlängen.

8. Verfahren nach einem der vorangehenden Ansprüche, **dadurch gekennzeichnet, dass** es zusätzlich auf Bilder angewandt wird, die zu unterschiedlichen Zeitpunkten und unterschiedlichen Kamera- oder Objektpositionen (P) im selben Spektralbereich angefertigt worden sind, und/oder eine Identifikation einer interessierenden Region und/oder eine Korrektur von Linsenfehlern und/oder eine Kalibrierung von Projektionsfehlern und/oder eine Registrierung eines höherauflösenden Sensors und/oder eine spektrale Verbesserung und/oder eine Kalibration des Dunkelstroms und/oder eine Kalibrationen zum Weißabgleich und/oder eine radiometrische Kalibrierung und/oder eine Kalibration im Rahmen der Photo Response Non Uniformity erfolgt.

9. Vorrichtung (6) zur Parallaxenbestimmung von Aufnahmen eines Multilinsen-Kamerasystems (1), wobei eine Parallaxe eines Objekts (O) in von dem multispektralen Multilinsen-Kamerasystem (1) aufgenommenen Bildern (B1, B2) bestimmt wird, die Vorrichtung (6) umfassend:
- eine Datenschnittstelle (7) ausgelegt zum Empfang von mindestens zwei Bildern (B1, B2) eines Objekts (O) aufgenommen von dem multispektralen Multilinsen-Kamerasystem (1) in unterschiedlichen Spektralbereichen,
- eine Erkennungseinheit (8) ausgelegt zur Erkennung des Objekts (O) in den aufgenommenen Bildern (B1, B2) mittels digitaler Objekterkennung und zur Erstellung eines virtuellen Objekts (O) aus der erkannten Abbildung des Objekts (O),
- eine Ermittlungseinheit (9) ausgelegt zur Ermittlung von Koordinaten des virtuellen Objekts (O) in den Bildern (B1, B2) in Form von absoluten Bildkoordinaten und/oder relativer Bildkoordinaten zu anderen Elementen in den Bildern (B1, B2),
- eine Parallaxeneinheit (10) ausgelegt zur Bestimmung der Parallaxe des Objekts (O) aus den ermittelten Koordinaten und der bekannten Position der Aufnahmeorte der Bilder (B1, B2) auf einem Bildsensor (3) des Multilinsen-Kamerasystems (1) wobei die Vorrichtung dazu ausgelegt ist, dass nach der Bestimmung der Parallaxe des Objekts (O) diese Parallaxe dazu verwendet wird, für ein Bild (B1, B2) einen Verschiebungsvektor zu bestimmen, mit dem das virtuelle Objekt (O) an die Position (P) eines virtuellen Objektes (O) in einem anderen Bild (B1, B2) verschoben werden kann, wobei das Bild (B1, B2) oder ein weiteres Bild, welches an der betreffenden Stelle des Bildsensors aufgenommen wurde, entsprechend dem Verschiebungsvektor verschoben wird, um die Parallaxe zu kompensieren.

10. Multilinsen-Kamerasystem (1) umfassend eine Vorrichtung (6) nach Anspruch 9.

## Claims

1. Method for determining the parallax of images from a multi-lens camera system (1), wherein a parallax of an object (O) is determined in images (B1, B2) captured by the multispectral multi-lens camera system (1), the method comprising the steps of:
- capturing and/or providing at least two images (B1, B2) of an object (O) captured by the multispectral multi-lens camera system (1) in different spectral ranges,
- detecting the object (O) in the captured images (B1, B2) by means of digital object detection and creating a virtual object (O) from the detected representation of the object (O),
- determining coordinates of the virtual object (O) in the images (B1, B2) in the form of absolute image coordinates and/or image coordinates relative to other elements in the images (B1, B2),
- determining the parallax of the object (O) from the determined coordinates and the known position of the capture locations of the images (B1, B2) on an image sensor (3) of the multi-lens camera system (1),
wherein, after the parallax of the object (O) has been determined, this parallax is used to determine a displacement vector for an image (B1, B2), by means of which the virtual object (O) can be shifted to the position (P) of a virtual object (O) in another image (B1, B2), wherein the image (B1, B2) or a further image captured at the relevant location on the image sensor is shifted in accordance with the displacement vector in order to compensate the parallax.

2. Method according to claim 1, **characterized in that** the detection of the object (O) is performed by means of image segmentation and/or feature-based, wherein in both cases there is preferably performed preprocessing of the image (B1, B2) first, in particular by means of an edge filter and/or by means of image erosion, and
- wherein the image segmentation is performed in particular by means of an edge filter, an adaptive threshold filter, and/or by means of flood-filling, and a similarity analysis of the virtual objects (O) is preferably performed subsequently, and
- wherein, in the case of feature-based object detection, a direct similarity analysis is carried out based on the entire image (B1, B2) or a series of parts of the image (B1, B2), in particular by means of cross-correlation.

3. Method according to any of the preceding claims, **characterized in that**, upon detection of the object (O) in an image (B1, B2), information regarding elements and/or the position (P) and/or the shape of the object (O) from a previous detection of the object (O) in another image (B1, B2) is used, preferably from another image (B1, B2) in the same row or column on the image sensor (3).

4. Method according to any of the preceding claims, **characterized in that** at least the virtual object (O) is shifted according to the displacement vector, and another region of the image (B1, B2) is not shifted or is shifted according to a different displacement vector.

5. Method according to any of the preceding claims, **characterized in that**, after determining the parallax of the object (O), this parallax is used to calculate the distance of the object (O) relative to another element of a subject (M) and/or to the multi-lens camera system (1), preferably using a known distance of an element of the image (B1, B2).

6. Method according to claim 5, **characterized in that** viewing angles at which the object is represented in the images are calculated from the determined distance, and together with the intensity of image points of the object measured in the image, a radiation characteristic of the object is determined.

7. Method according to any one of the preceding claims, **characterized in that** a dispersion correction of images from a multi-lens camera system (1) is performed, comprising the following steps:
- determining the spectral sensitivity for a region of a filter element of the multi-lens camera system (1) that is associated with a predetermined region of an image sensor (3) of the multi-lens camera system (1), preferably based on the results of the parallax determination,
- determining the central wavelength for at least two pixels of the predetermined region of the image sensor (3) based on the determined spectral sensitivity of the region,
- calibrating the region of the image sensor (3) and/or images (B1, B2) captured with this region of the image sensor (3) based on the determined central wavelengths.

8. Method according to any one of the preceding claims, **characterized in that** it is additionally applied to images captured at different times and different camera or object positions (P) in the same spectral range, and/or **in that** an identification of a region of interest and/or a correction of lens errors and/or a calibration of projection errors and/or a registration of a higher-resolution sensor and/or a spectral enhancement and/or a calibration of dark current and/or a calibration for white balance and/or a radiometric calibration and/or a calibration regarding photo-response non-uniformity is performed.

9. Device (6) for determining the parallax of images from a multi-lens camera system (1), wherein a parallax of an object (O) is determined in images (B1, B2) captured by the multispectral multi-lens camera system (1), the device (6) comprising:
- a data interface (7) configured to receive at least two images (B1, B2) of an object (O), captured by the multispectral multi-lens camera system (1) in different spectral ranges,
- a detection unit (8) configured to detect the object (O) in the captured images (B1, B2) by means of digital object recognition and to create a virtual object (O) from the detected representation of the object (O),
- a determination unit (9) configured to determine coordinates of the virtual object (O) in the images (B1, B2) in the form of absolute image coordinates and/or image coordinates relative to other elements in the images (B1, B2),
- a parallax unit (10) configured to determine the parallax of the object (O) from the determined coordinates and the known position of the capture locations of the images (B1, B2) on an image sensor (3) of the multi-lens camera system (1),
wherein the device is configured such that, after the parallax of the object (O) has been determined, this parallax is used to determine, for an image (B1, B2), a displacement vector with which the virtual object (O) can be shifted to the position (P) of a virtual object (O) in another image (B1, B2), wherein the image (B1, B2) or a further image captured at the relevant location on the image sensor is shifted according to the displacement vector to compensate the parallax.

10. Multi-lens camera system (1) comprising a device (6) according to claim 9.

## Revendications

1. Procédé de détermination de la parallaxe d'images enregistrées par un système de caméra à lentilles multiples (1), dans lequel la parallaxe d'un objet (O) est déterminée à partir d'images (B1, B2) enregistrées par le système de caméra multispectrale à lentilles multiples (1), le procédé comprenant les étapes suivantes :
- l'acquisition et/ou la mise à disposition d'au moins deux images (B1, B2) d'un objet (O) capturées par le système de caméra multispectrale à lentilles multiples (1) dans différentes bandes spectrales,
- reconnaissance de l'objet (O) dans les images capturées (B1, B2) au moyen d'une reconnaissance numérique d'objet et création d'un objet virtuel (O) à partir de la représentation reconnue de l'objet (O),
- détermination des coordonnées de l'objet virtuel (O) dans les images (B1, B2) sous forme de coordonnées d'image absolues et/ou de coordonnées d'image relatives par rapport à d'autres éléments présents dans les images (B1, B2),
- détermination de la parallaxe de l'objet (O) à partir des coordonnées déterminées et de la position connue des emplacements des images capturées (B1, B2) sur un capteur d'image (3) du système de caméra à lentilles multiples (1),
cette parallaxe étant ensuite utilisée, une fois déterminée, pour déterminer, pour une image (B1, B2), un vecteur de déplacement permettant de déplacer l'objet virtuel (O) vers la position (P) d'un objet virtuel (O) dans une autre image (B1, B2), l'image (B1, B2) ou une autre image capturée à l'emplacement concerné du capteur d'image étant décalée conformément au vecteur de décalage afin de compenser la parallaxe.

2. Procédé selon la revendication 1, **caractérisé en ce que** la reconnaissance de l'objet (O) s'effectue au moyen d'une segmentation d'image et/ou sur la base de caractéristiques, un prétraitement de l'image (B1, B2) étant de préférence effectué dans les deux cas, notamment au moyen d'un filtre de détection de contours et/ou au moyen d'une érosion d'image, et
- la segmentation de l'image s'effectuant notamment à l'aide d'un filtre de détection de contours, d'un filtre à seuil adaptatif et/ou par remplissage par inondation, et une analyse de similarité des objets virtuels (O) étant de préférence effectuée ensuite, et
- dans laquelle, lors de la reconnaissance d'objets basée sur des caractéristiques, une analyse de similarité directe est effectuée à partir de l'image entière (B1, B2) ou d'une série de parties de l'image (B1, B2), notamment au moyen d'une corrélation croisée.

3. Procédé selon l'une des revendications précédentes, **caractérisé en ce que**, lors de la reconnaissance de l'objet (O) dans une image (B1, B2), des informations relatives aux éléments et/ou à la position (P) et/ou à la forme de l'objet (O) issues d'une reconnaissance antérieure de l'objet (O) dans une autre image (B1, B2) sont utilisées, de préférence provenant d'une autre image (B1, B2) située sur la même ligne ou la même colonne du capteur d'image (3).

4. Procédé selon l'une des revendications précédentes, **caractérisé en ce qu'**au moins l'objet virtuel (O) est déplacé selon le vecteur de déplacement et qu'une autre zone de l'image (B1, B2) n'est pas déplacée ou est déplacée selon un autre vecteur de déplacement.

5. Procédé selon l'une des revendications précédentes, **caractérisé en ce qu'**après la détermination de la parallaxe de l'objet (O), cette parallaxe est utilisée pour calculer la distance de l'objet (O) par rapport à un autre élément d'un motif (M) et/ou au système de caméra à lentilles multiples (1), de préférence en utilisant une distance connue d'un élément de l'image (B1, B2).

6. Procédé selon la revendication 5, **caractérisé en ce que**, à partir de la distance déterminée, on calcule les angles de vue sous lesquels l'objet est représenté dans les images et, conjointement avec l'intensité des pixels de l'objet mesurée dans les images, on détermine une caractéristique de rayonnement de l'objet.

7. Procédé selon l'une des revendications précédentes, **caractérisé en ce qu'**une correction de la dispersion des images prises par un système de caméra à lentilles multiples (1) est effectuée, comprenant les étapes suivantes :
- détermination de la sensibilité spectrale pour une zone d'un élément filtrant du système de caméra à lentilles multiples (1), qui est associée à une zone prédéterminée d'un capteur d'image (3) du système de caméra à lentilles multiples (1), de préférence sur la base des résultats de la détermination de la parallaxe,
- détermination de la longueur d'onde centrale pour au moins deux pixels de la zone prédéfinie du capteur d'image (3) sur la base de la sensibilité spectrale déterminée de cette zone,
- étalonnage de la zone du capteur d'image (3) et/ou d'images (B1, B2) enregistrées avec cette zone du capteur d'image (3), sur la base des longueurs d'onde centrales déterminées.

8. Procédé selon l'une des revendications précédentes, **caractérisé en ce qu'**il s'applique en outre à des images qui ont été prises à différents moments et à différentes positions de la caméra ou de l'objet (P) dans la même gamme spectrale, et/ou comprend l'identification d'une région d'intérêt et/ou une correction des aberrations de l'objectif et/ou un étalonnage des erreurs de projection et/ou un alignement d'un capteur à plus haute résolution et/ou une amélioration spectrale et/ou un étalonnage du courant d'obscurité et/ou des étalonnages pour la balance des blancs et/ou un étalonnage radiométrique et/ou un étalonnage dans le cadre de la non-uniformité de la réponse photographique.

9. Dispositif (6) destiné à la détermination de la parallaxe d'images enregistrées par un système de caméra à lentilles multiples (1), dans lequel une parallaxe d'un objet (O) est déterminée à partir d'images (B1, B2) enregistrées par le système de caméra multispectrale à lentilles multiples (1), le dispositif (6) comprenant :
- une interface de données (7) conçue pour recevoir au moins deux images (B1, B2) d'un objet (O) capturées par le système de caméra multispectrale à lentilles multiples (1) dans différentes gammes spectrales,
- une unité de reconnaissance (8) conçue pour reconnaître l'objet (O) dans les images capturées (B1, B2) au moyen d'une reconnaissance numérique d'objets et pour créer un objet virtuel (O) à partir de la représentation reconnue de l'objet (O),
- une unité de détermination (9) conçue pour déterminer les coordonnées de l'objet virtuel (O) dans les images (B1, B2) sous forme de coordonnées d'image absolues et/ou de coordonnées d'image relatives par rapport à d'autres éléments présents dans les images (B1, B2),
- une unité de parallaxe (10) conçue pour déterminer la parallaxe de l'objet (O) à partir des coordonnées déterminées et de la position connue des emplacements des images capturées (B1, B2) sur un capteur d'image (3) du système de caméra à lentilles multiples (1)
le dispositif étant conçu de telle sorte qu'après la détermination de la parallaxe de l'objet (O), cette parallaxe soit utilisée pour déterminer, pour une image (B1, B2), un vecteur de déplacement permettant de déplacer l'objet virtuel (O) vers la position (P) d'un objet virtuel (O) dans une autre image (B1, B2), l'image (B1, B2) ou une autre image capturée à l'emplacement concerné du capteur d'image étant décalée conformément au vecteur de déplacement afin de compenser la parallaxe.

10. Système de caméra à lentilles multiples (1) comprenant un dispositif (6) selon la revendication 9.
